# EUROPEAN PATENT APPLICATION

(11) **EP 0 785 544 A1**
(43) Date of publication of application: **23.07.1997**
(21) Application number: 97300338.7
(22) Date of filing: 20.01.1997
(51) Int. Cl.: G11B 7/24, G11B 7/00

(54) **Worm type optical recording medium and optical recording method therefor**

(30) Priority: 18.01.1996 KR 9601033
(71) Applicant: SAMSUNG ELECTRONICS Co. Ltd., Kyungki-do, Seoul (KR)
(72) Inventor: Kim, Gwon-Young, Suwon-city, Kyungki-do (KR); Lee, Soo-hyung, Yongin-city, Kyungki-do (KR)
(74) Representative: Crawford, Fiona Merle

(57) **Abstract**

A write once read many (WORM) type optical recording medium and an optical recording method therefor are provided. The optical recording medium has a multi-functional layer (2) functioning as both a recording layer and a reflective layer, and a protective layer (3), sequentially formed on a substrate (1). This medium can be manufactured simply due to its simple structure and provides good recording sensitivity and compatibility with a CD player using a laser beam of wavelength of 400-850nm. Also, in the optical recording method for recording information in the WORM type optical recording medium, the substrate, the multi-functional layer and the protective layer all participate in the information recording mechanism to form a recording bump.

## Description

The present invention relates to a write once read many (WORM) type optical recording medium and an optical recording method therefor, and more particularly, to a WORM type optical recording medium having a recording layer of a uniform thickness, which enables high density recording with laser beams of a wide range of wavelengths, and an optical recording method therefor.

Magnetic recording media, currently being used everywhere, are based on the principle that information is recorded according to the magnetization direction of a magnetic substance. Such magnetic recording media include a video tape, an audio tape, a floppy disk and others.

Meanwhile, a worldwide information explosion has required recording media to enable high density and high speed recording with high capacity. However, there is difficulty in implementing manufacturing an optical recording medium having high capacity from a conventional magnetic recording medium, therefore another recording medium adopting a new recording method, that is, an optical recording medium, has been developed.

The optical recording media are classified into a read only memory (ROM) type for only reading recorded information, a write once read many (WORM) type which allows only one writing, and a rewritable type which allows erasing of recorded information and rewriting. It is required for an optical recording medium that the recorded information therein can be reproduced by a reproducer for the ROM type media. For this, a reflectivity of 70% or more and a carrier-to-noise ratio (CNR) of 47dB or more are required for the optical recording medium.

In the optical recording media in which information is recorded, the recorded information can be reproduced by a reproducer by detecting a change in the reflectivity caused by physical deformation and changes in phase and magnetic properties of a recording layer before and after the recording. Also, for compatibility of the optical recording medium with a compact disk (CD), the recorded information should be preserved for an extended period of time and high recording sensitivity is required as well as the above-described high reflectivity and high CNR characteristic.

From the development of the optical recording media, research into an optical recording medium which satisfies the above requirements and has improved characteristics has been conducted.

Japanese laid-open patent publication No. showha 63-268142 discloses an optical recording medium having a sensitizing layer formed by depositing a composition including a gelatin, a casein and a polyvinyl alcohol (PVA) on a substrate and a metal thin film formed on the sensitizing layer. According to the optical recording medium, the metal thin film absorbs a laser beam used for recording, so that the sensitizing layer and the metal thin film are deformed, thereby forming a recording pit. However, since the recording pit is formed in an exposed type, it is difficult to preserve the recorded information for an extended period of time.

U.S. patent No. 4,983,440 discloses an optical recording medium having a dual layered metal thin film acting as a recording layer and a protective layer for protecting the metal thin film, on a substrate in sequence. However, since the metal thin film cannot function well as a reflective layer, reflectivity of the optical recording medium is decreased to 20% or less and compatibility with the CD cannot be assured. Also, in the optical recording medium, information is recorded by the decomposition of the substrate material, not by the swelling and deformation of the substrate. Thus, a material which can generate high-thermal energy enabling decomposition of the substrate should be used for the metal thin film. Also, the deformation by the recording pit is limited to the metal thin layer itself, resulting in poor CNR characteristics.

U.S. patent No. 5,073,219 discloses a method for manufacturing an optical recording medium as well. According to the method, a metal such as aluminum (Al), gold (Au) or copper (Cu), or an alloy of the metals are deposited on the entire surface of a substrate to form an electroconductive layer, and then a recording layer including a liquid crystal and a dichroic dye is formed, and then the liquid crystal and the dichroic dye are orientated by the corona discharge, magnetic field or shear stress. According to the optical recording medium manufactured by this method, information is recorded according to the difference in reflectivity between grooves and lands, which results from changes of the orientation of the liquid crystal and the dichroic dye of a light. However, since the reflectivity difference between the grooves and the lands is not sufficient to satisfy a good tracking condition. Thus, the reflectivity of a portion of the recording medium in which the information is recorded is low.

In a WORM type recording medium using a dye, a recording layer as the most important portion is formed in general through a spin coating in which a substrate is coated with a coating solution including solvent and dye and optionally quencher. However, the recording layer formed by this process does not have uniform optical characteristics.

In other words, the recording layer is formed by spin-coating the substrate made of polycarbonate, polymethylmetalcrylate, cellulose acetate and acryl resin with a coating solution, and the optical characteristic of the recording layer is affected by the uniformity and thickness of the coated layer. However, the coating solution is irregularly dispersed over the substrate, and the coating process is also complicated. That is, the spin coating process include various factors affecting the thickness of the recording layer, such as concentration of coating solution, rotation speed and acceleration of a spin coater, coating time, flow rate of the coating solution and dosing time. However, it is difficult to properly control the above factors. Further, viscosity of the coating solution as a factor practically affecting the thickness of the recording layer is difficult to control.

Also, as an organic solvent used in the preparation of the coating solution for forming the recording layer, diacetone alcohol, methylcellosolve or cyclohexanone are mainly used. However, since the solubility of the dye in the above organic solvent is low, it is difficult to increase the concentration of the coating solution. Accordingly, it is also difficult to manufacture a recording layer having a desired thickness.

In addition, if the major component of the recording layer is a dye, only light of a specific wavelength is used for recording/reproduction and a signal is formed by the dye and the thermal deformation of the substrate. Accordingly, it is difficult to finely control the amplitude of a signal during the high density recording.

On the other hand, U.S. patent No. 5,328,813 discloses an optical recording medium having an excellent recording preservation property and an improved reflectivity. According to this optical recording medium, a soft metal layer is formed on a substrate as a recording layer, and then a hard metal oxide layer is formed on the soft metal layer, thereby increasing the recording preservation property and improving the reflectivity to 40∼60%. However, the CNR is decreased while the reflectivity increases. Thus, it is difficult to manufacture an optical recording medium having both high reflectivity and high CNR.

It is an object of the present invention to provide a write once read many (WORM) type optical recording medium having a recording layer of a uniform thickness by which high density recording is implemented with laser beams of a wide range of wavelengths and providing high reflectivity and an excellent reproduction characteristic, and a method for recording information in the optical recording medium.

According to one aspect of the present invention, there is provided a WORM type optical recording medium in which a multi-functional layer functioning as both a recording layer and a reflective layer, and a protective layer are sequentially formed on a substrate.

According to another aspect of the present invention, there is provided an optical recording method for recording information in a WORM type optical recording medium in which a multi-functional layer functioning as both a recording layer and a reflective layer, and a protective layer are sequentially formed on a substrate, the optical recording method comprising the steps of: (a) irradiating a recording light on the multi-functional layer to generate heat from the multi-functional layer; (b) deforming the substrate through swelling by transferring the heat generated from the multi-functional layer to the substrate; and (c) forming a recording bump protruded toward the multi-functional layer through the swelling of the substrate to store a signal.

According to embodiments of the WORM type optical recording medium of the present invention, the multi-functional layer acts both as a recording layer and a reflective layer of a general organic optical disk, and can be manufactured easily due to its simple structure. Also, the multi-functional layer is made of a metal, so that the light absorbance range of the multi-functional layer is wider, unlike a conventional recording layer employing the organic dye having light absorbency at only a specific wavelength. Thus, embodiments of the optical recording medium of the present invention can be used in a digital versatic disk player (DVDP) using a light of wavelength ranges of 400-800nm as well as in a CD player using a light of 780nm.

Embodiments of the present invention will now be described, by way of example, with reference to the accompanying drawings, in which:

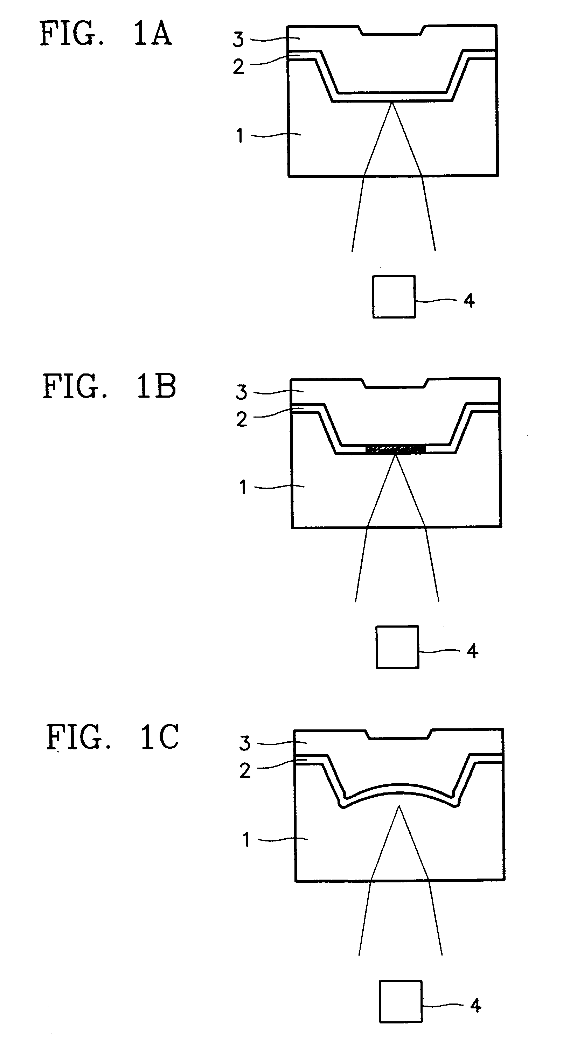

FIGS. 1A to 1C are diagrams illustrating the recording principle of the optical recording medium according to the present invention.

In the structure of an optical recording medium of the present invention, a multi-functional layer acting as both a reflective layer and a recording layer, and a protective layer are provided sequentially on a substrate.

Each constituent will now be described in detail, starting with the substrate. As a material for the substrate, any material having excellent thermal and mechanical characteristics and excellent light transmission characteristic can be used without limitations. Generally, polycarbonate, polymethylmetacrylate, amorphous polyolefin, cellulose acetate or polyethylenetelephtalate is used for the substrate, preferably, polycarbonate and amorphous polyolefin. Also, there are no restrictions in the manufacturing method of the substrate, and a general method such as injection molding can be used. Also, there is no special requirement with respect to the thickness of the substrate, however, the thickness thereof is preferably 0.6mm for a digital versatic disk player (DVDP). In addition, it is preferable that the substrate is formed by the injection molding with grooves on the surface thereof for adjusting the recording position and speed.

The multi-functional layer can be formed by a thin film formation method such as a sputtering method using a metal having excellent absorbency with respect to light having a wavelength ranges of 400-850nm and low thermal conductivity. Preferably, the multi-functional layer has a thermal conductivity of no more than 4W/cm°C. Preferably, the multi-functional layer is formed of a pure metal such as gold (Au), copper (Cu), aluminum (Al), silver (Ag), platinum (Pt), nickel (Ni), chromium (Cr), titanium (Ti), tantalum (Ta), or an alloy thereof. Preferably, Cr, Ni, Ti, Ta, Cu/Al alloy and nickel/iron (Ni/Fe) alloy are used for forming the multi-functional layer. Here, the thickness of the multi-functional layer is preferably 50∼200Å.

Also, the protective layer is formed by spin-coating a resin composition on the multi-functional layer, and then by curing the resin composition through radiation of ultraviolet rays or a thermal treatment. Here, epoxy resin, acryl resin, silicon resin or urethane resin is preferably used as the resin to be cured by the ultraviolet rays or the heat. There are two kinds of resin for overcoating, including hard resin such as acryl and epoxy, and soft resin such as silicon and urethane, so both of them may be used. Particularly, it is preferable that the acyl resin and epoxy resin are used after being modified to have elasticity and flexibility. Here, the modification is performed using a reactive elastomer or a siloxane modifier having a low molecular weight, or a silicon modifier. Also, bisphenol resin, modified phenol novolac or modified cresol novolac is preferably used as the epoxy resin. On the other hand, siloxane having a reactive terminal group such as vinyl, m-acryloxyl, epoxy, amino, mercapto and chloropropyl groups may be used as a soft overcoating material. Here, it is preferable to perform a pre-treatment using a silane-based coupling agent or silicon mix with siloxane in order to improve the adhesiveness of siloxane coating surface. Also, urethane may be used as another overcoating material, but if urethane having a low molecular weight and isocyanate is used as a starting material for forming the polyurethane resin, it is difficult to control the reaction velocity in the manufacturing process of the recording medium. Thus, it is preferable to use an intermediate polymer as the material for forming the polyurethane resin for convenience in the manufacturing process.

The protective layer has an appropriate flexibility such that one surface in the protective layer absorbs the deformation of substrate and multi-functional layer.

The optical recording medium manufactured through the above-described process represents a uniform absorbency with respect to the light of a wide range of wavelengths. That is, a metal used as the material for the multi-functional layer has uniform absorbency with respect to light of a wide range of wavelengths, unlike a general organic dye.

Referring to FIGS. 1A to 1C, the information recording principle of the optical recording medium according to the present invention will be described.

When a light source 4 such as a 4-20mW laser beam of 400-850nm is focused on a multi-functional layer 2, a metal of the multi-functional layer 2 absorbs the focused light and increasing its temperature to above 500°C. Accordingly, the heat is emitted from the multi-functional layer 2 and then transferred to a substrate 1, causing the deformation (that is, swelling) in the substrate 1 and the multi-functional layer 2. The swollen substrate 1 forms a bump protruding toward the multi-functional layer 2, and this deformation is absorbed by a protective layer 3 having elasticity and flexibility. As a result, the deformation by the recording, that is, recording bump, is stably maintained to store a signal. Meanwhile, in order to reproduce information recorded in the above recording bump, a 0.4∼1.0mW laser beam having the same wave length as that used for recording is irradiated. The reflectivity between the recorded portion and non-recorded portion is differentiated due to the difference of scattering and optical properties therebetween, thereby reproducing the recorded information.

Therefore, in the optical recording medium according to the present invention, the substrate 1 is physically swollen by receiving heat generated from the multi-functional layer 2.

The multi-functional layer 2 generates heat by absorbing the laser beam for the recording, transfers the generated heat to the substrate 1, and functions as a recording layer during recording and as a reflective layer during reproduction. Also, the protective layer 3 participates in the information recording mechanism by functioning as a buffer layer for absorbing the deformation of the substrate 1 and the multi-functional layer 2, besides preventing damage to the optical recording medium. That is, the substrate 1, the multi-functional layer 2 and the protective layer 3 all participate in the information recording mechanism in the optical recording medium according to the present invention, thereby forming the recording bump.

Hereinafter, examples of the present invention will be described in detail, however, the present invention is not limited to the following examples.

### <Example 1>

A polycarbonate substrate having a thickness of 1.2mm was prepared, in which grooves having a depth of 170nm and a track pitch of 1.6µm with a frequency-modulated wobble of 22.0±0.5kHz. Then, a multi-functional layer was formed of copper (Cu) to a thickness of 70Å on the substrate through a sputtering method. Then, epoxyacryl resin as a UV-curing resin was coated on the multi-functional layer through spin coating. Then, a layer was formed by irradiating ultraviolet rays on the multi-functional layer coated with the epoxyacryl resin, completing an optical disk of the present invention.

The reflectivity was measured by a pick up of a 780nm wavelength and an evaluation equipment (OHMT-502, manufactured by Apex in USA). As a result, the reflectivity of the optical disk was 25%. Also, a signal of 720kHz was recorded at a rate of 1.3m/sec using a 8mW laser beam, and then reproduced using a 0.7mW laser beam. As a result, the carrier-to-noise ratio (CNR) of the reproduced signal was 49dB, which shows good recording sensitivity. For measuring reliability, after leaving the optical disk for three days under conditions of 60°C and 90% relative humidity (RH), the reflectivity and the CNR were measured again. As a result, the reflectivity and the CNR were 25% and 48dB, respectively, with hardly any changes.

### <Example 2>

An optical disk was prepared in the same manner as that of Example 1 except a multi-functional layer was formed of an alloy of Cu/Al to a thickness of 70Å. Also, the reflectivity, CNR and reliability were measured in the same manner as that of Example 1. As a result, the reflectivity and CNR were 26% and 52dB, respectively, showing good recording sensitivity. When the reflectivity and CNR were measured again for measuring reliability, the results were 25% and 51dB, respectively, with hardly any changes.

### <Example 3>

An optical disk was prepared in the same manner as that of Example 1 except a multi-functional layer was formed of an alloy of Ni/Fe to a thickness of 85Å. Also, the reflectivity, CNR and reliability were measured in the same manner as that of Example 1. As a result, the reflectivity and CNR were 24% and 55dB, respectively, showing good recording sensitivity. When the reflectivity and CNR were measured again for measuring reliability, the results were 24% and 55dB, respectively, without any changes.

### <Example 4>

An optical disk was prepared in the same manner as that of Example 1 except a multi-functional layer was formed of Ni to a thickness of 80Å. Also, the reflectivity, CNR and reliability were measured in the same manner as that of Example 1. As a result, the reflectivity and CNR were 24% and 52dB, respectively, showing good recording sensitivity. When the reflectivity and CNR were measured again for measuring reliability, the results were 24% and 51dB, respectively, with hardly any changes.

### <Example 5>

An optical disk was prepared in the same manner as that of Example 1 except a protective layer was formed by spin-coating silicon resin (X-2577, Dow Corning Co.) on the multi-functional layer and then the silicon resin was cured at 80°C for about 10 minutes. Also, the reflectivity and CNR were measured in the same manner as that of Example 1. As a result, the reflectivity and CNR were 28% and 55dB, respectively, showing good recording sensitivity.

### <Example 6>

An optical disk was prepared in the same manner as that of Example 1 except a protective layer was formed by spin-coating silicon resin (I-4105, Dow Corning Co.) on the multi-functional layer and then the silicon resin was cured at 80°C for about 10 minutes. Also, the reflectivity and CNR were measured in the same manner as that of Example 1. As a result, the reflectivity and CNR were 27% and 61dB, respectively, showing good recording sensitivity.

The results from the above examples show that the multi-functional layer of the optical recording medium according to the present invention functions well as both a recording layer and a reflective layer. Particularly, the results from Examples 5 and 6 show that the elasticity and flexibility of the protective layer change according to the molecular weight and degree of cross-linking of material composing the protective layer, affecting the signal formation in the recording of information. That is, it can be understood that the protective layer contributes to the information recording mechanism.

As described above, according to the optical recording medium of the present invention, one multi-functional layer functions as both a recording layer and a reflective layer, so that the optical recording medium can be manufactured through a simple manufacturing process. Also, a uniform thickness of the recording layer provides good recording sensitivity and diversified light applicability provides compatibility with a CD player using a laser beam of wavelength of 400∼850nm.

## Claims

1. A write once read many (WORM) type optical recording medium in which a multi-functional layer (2) functioning as both a recording layer and a reflective layer, and a protective layer (3) are sequentially provided on a substrate (1).

2. A WORM type optical recording medium as claimed in claim 1, wherein said substrate (1) is formed of a polymer selected from the group consisting of polycarbonate, polymethylmetacrylate, amorphous polyolefin, cellulose acetate and polyethylenetelephthalate.

3. A WORM type optical recording medium as claimed in claim 1 or 2, wherein the thickness of said multi-functional layer (2) is 50∼200Å.

4. A WORM type optical recording medium as claimed in any preceding claim, wherein said multi-functional layer (2) is formed of a metal selected from the group consisting of gold (Au), copper (Cu), aluminum (Al), silver (Ag), nickel (Ni), chromium (Cr), titanium (Ti), tantalum (Ta), platinum (Pt) and alloy of any of the aforesaid metals.

5. A WORM type optical recording medium as claimed in any of claims 1 to 3, wherein said multi-functional layer (2) has excellent absorbency with respect to light having a wavelength range of 400-850nm and low thermal conductivity.

6. A WORM type optical recording medium as claimed in claim 5, wherein said multi-functional layer (2) is formed of one selected from the group consisting of chromium (Cr), nickel (Ni), titanium (Ti) and tantalum (Ta).

7. A WORM type optical recording medium as claimed in any preceding claim, wherein said protective layer (3) is formed of a resin modifier selected from the group consisting of epoxy resin, acryl resin, silicone resin and urethane resin.

8. A WORM type optical recording medium as claimed in any preceding claim, wherein said protective layer (3) has a thickness of 1∼30µm.

9. A WORM type optical recording medium as claimed in any preceding claim, wherein said multi-functional layer (2) and said substrate (1) have a recording bump.

10. A WORM type optical recording medium substantially as herein described with reference to any one of Examples 1 to 5.

11. An optical recording method for recording information in a write once read many (WORM) type optical recording medium having a multi-functional layer (1) functioning as both a recording layer and a reflective layer, and a protective layer (2) sequentially provided on a substrate (1), said optical recording method comprising irradiating a recording light on said multi-functional layer to generate heat from said multi-functional layer, and wherein deformation of said substrate is obtained through swelling by transferring the heat generated from said multi-functional layer to said substrate, and formation of a recording bump protruded toward said multi-functional layer is obtained through the swelling of said substrate to store a signal.

12. An optical recording method as claimed in claim 11, wherein the recording light is a laser beam having a wavelength of 400∼850nm.

13. An optical recording method as claimed in claim 11 or 12, wherein in said step (c), the swelling of said substrate is absorbed by said protective layer.

14. An optical recording method as claimed in claim 11, 12 or 13, wherein said protective layer is formed of a resin modifier selected from the group consisting of epoxy resin, acryl resin, silicone resin and urethane resin.

15. An optical recording method as claimed in any of claims 11 to 14, wherein said substrate of said optical recording medium is formed of a polymer selected from the group consisting of polycarbonate, polymethylmetacrylate, amorphous polyolefin, cellulose acetate and polyethylenetelephthalate.

16. An optical recording method as claimed in any of claims 11 to 15, wherein the thickness of said multi-functional layer of the optical recording medium is 50∼200Å.

17. An optical recording method as claimed in any of claims 11 to 16, wherein said multi-functional layer is formed of a metal selected from the group consisting of gold (Au), copper (Cu), aluminum (Al), silver (Ag), nickel (Ni), chromium (Cr), titanium (Ti), tantalum (Ta), platinum (Pt) and alloy of any of the aforesaid metals.

18. An optical recording method as claimed in any of claims 11 to 16, wherein said multi-functional layer has excellent absorbency with respect to light having a wavelength range of 400-850nm and low thermal conductivity.

19. An optical recording method as claimed in claim 18, wherein said multi-functional layer is formed of one selected from the group consisting of chromium (Cr), nickel (Ni), titanium (Ti) and tantalum (Ta).

20. An optical recording method as claimed in any of claims 12 to 19, wherein said multi-functional layer and said substrate have a recording bump.

21. An optical recording method for recording information in a write once read many (WORM) type optical recording medium substantially as herein described with reference to the accompanying drawing.
